# EUROPEAN PATENT SPECIFICATION

(11) **EP 1 160 482 B1**
(45) Date of publication and mention of the grant of the patent: **04.01.2006**
(21) Application number: 01112893.1
(22) Date of filing: 01.06.2001
(51) Int. Cl.: F16F 5/00, F16F 6/00, F16F 15/03

(54) **Magnetic spring structure and vibration relief mechanism having same incorporated therein**
Magnetfeder und Schwingungsdämpfungsmechanismus mit dieser Feder
Ressort magnétique et mécanisme d'amortissement des vibrations le comprenant

(30) Priority: 02.06.2000 JP 2000166592
(43) Date of publication of application: 05.12.2001
(73) Proprietor: Delta Tooling Co., Ltd., Hiroshima-shi Hiroshima 736-0084 (JP)
(72) Inventor: Enoki, Yoshimi, Akiku, Hiroshima-shi, Hiroshima 736-0084 (JP); Wagata, Shigeki, Akiku, Hiroshima-shi, Hiroshima 736-0084 (JP); Oshimo, Hiroki, Akiku, Hiroshima-shi, Hiroshima 736-0084 (JP); Fujita, Etsunori, Akiku, Hiroshima-shi, Hiroshima 736-0084 (JP); Honda, Hiroki, Akiku, Hiroshima-shi, Hiroshima 736-0084 (JP); Yamane, Hideyuki, Akiku, Hiroshima-shi, Hiroshima 736-0084 (JP)
(74) Representative: HOFFMANN EITLE

(56) References cited:
- DE-A- 2 024 746
- FR-A- 2 415 751
- US-A- 5 017 819

## Description

### BACKGROUND OF THE INVENTION

This invention relates to a magnetic spring structure and a vibration relief mechanism having the magnetic spring structure incorporated therein, and more particularly to a magnetic spring structure and a vibration relief mechanism suitable for incorporation into a vibration relief structure for a suspension unit used in a seat for a conveyance such as an automobile, an electric car or a ship, an engine mount, or the like.

A variety of damping materials, dampers and control techniques have been conventionally proposed as measures to counter vibration and noise for a machine or a structure which is typically constructed of a material reduced in internal damping in order to ensure rigidity thereof.

Damage to a human body and a nervous system due to exposure of the human body to vibration has been in question with an increase in speed of a conveyance. Such damage is expressed in the form of symptoms such as fatigue, headache, stiffness of shoulders, lumbago, amblyopia and the like. In general, vibration isolation is attained using any optimum combination between a spring and a damping material which are selected from the group consisting of a metal spring, an air spring, rubber, a viscoelastic material and a damper. However, such a combination causes dynamic magnification and a loss factor to be contrary to each other. More particularly, a reduction in dynamic magnification for the purpose of improving low-frequency characteristics causes a spring formed to be reduced in loss factor, resulting in the spring being hard. An increase in loss factor to improve high-frequency characteristics leads to a spring increased in dynamic magnification like a damping material, so that the spring is rendered disadvantageously soft to a degree of deteriorating low-frequency characteristics. In view of the fact, many attempts are made in the art which are directed to suppression of vibration using a passive damper including a dynamic vibration reducer or by semiactive control or active control.

Under such circumstances, there is recently proposed a damping apparatus including a magnetic spring structure. Also, there is proposed a vibration relief mechanism which is constructed so as to permit a whole spring constant thereof to be set to be falsely substantially zero by incorporation of a damping member such as a metal spring, a rubber material or the like into such a magnetic spring structure. However, the vibration relief mechanism proposed causes an increase in manufacturing cost and complication in construction. Thus, it is highly desired to develop a novel magnetic spring structure which is capable of being simplified in construction to reduce a manufacturing cost thereof and facilitate maintenance thereof, utilized as a damping apparatus and permitting a spring constant obtained by combination with a damping member to be falsely substantially zero. Development of such a structure would realize simplification of a structure such as a suspension unit, an engine mount or the like and down-sizing thereof, to thereby ensure control thereof at high performance and facilitate maintenance thereof.

Also, a magnetic spring structure is often utilized in a lift or raising mechanism for raising a desired object by means of repulsion force between magnets. However, utilization of only the magnets is insufficient to support load mass while relatively raising it using repulsion of the magnets, thus, it is required to additionally arrange a linkage, a guide mechanism or the like. Unfortunately, arrangement of the linkage or the like causes the mechanism to be complicated in construction, leading to large-sizing of the mechanism. Also, it causes backlash of the linkage, friction thereof and the like, to thereby hinder precise control of the mechanism and cause complication in maintenance thereof.

In general, magnetic spring structures are known in the art. Examples for such spring structures may be taken from US-A-5,017,819, FR-A-2 415 751 or DE-A-202 47 46.

### SUMMARY OF THE INVENTION

The present invention has been made in view of the foregoing disadvantage of the prior art.

Accordingly, it is an object of the present invention to provide a magnetic spring structure which is capable of being used as a damping apparatus by only a predetermined magnetic circuit construction.

It is another object of the present invention to provide a magnetic spring structure which is capable of permitting a whole spring constant thereof obtained by a combination thereof with a cushioning member such as a metal spring, a rubber material or the like to be falsely set to be substantially zero.

It is a further object of the present invention to provide a magnetic spring structure which is capable of being simplified in construction and manufactured at a reduced cost as compared with the prior art.

It is still another object of the present invention to provide a vibration relief apparatus which is capable of being used as a damping apparatus by only a predetermined magnetic circuit construction.

It is yet another object of the present invention to provide a vibration relief apparatus which is capable of permitting a whole spring constant thereof obtained by a combination thereof with a cushioning member such as a metal spring, a rubber material or the like to be falsely set to be substantially zero.

It is a still further object of the present invention to provide a vibration relief apparatus which is capable of being simplified in construction and manufactured at a reduced cost as compared with the prior art.

At least one of these objects is solved by the subject matter defined in claims 1, 6 and 7. Further embodiments are defined in the dependent claims.

In accordance with one aspect of the present invention, a magnetic spring structure is provided. The magnetic spring structure includes at least one movable element made of a magnetic material and at least two stationary magnets arranged outside the movable element so as to define a gap acting as a passage for the movable element. The stationary magnets urge the movable element by an action of an magnetic field generated thereby.

In the embodiment of the present invention, a plurality of the above-described stationary magnets are arranged so as to be spaced from each other at a predetermined interval in a direction of arrangement of the stationary magnets, to thereby define the gap therebetween.

In the embodiment of the present invention, the stationary magnets are arranged in such a manner that magnetic poles of the stationary magnets adjacent to each other in the direction of arrangement of the stationary magnets are opposite to each other.

In the embodiment of the present invention, the movable element is constituted by a permanent magnet which is so arranged that a direction of magnetization thereof is perpendicular to a direction of magnetization of the stationary magnet.

In a preferred embodiment of the present invention, the stationary magnet is constructed into a laminated structure.

In a preferred embodiment of the present invention, the movable element is constructed into a laminated structure.

In a preferred embodiment of the present invention, the movable element is made of a ferromagnetic material and has a plurality of points at which a spring constant thereof is reversed between a positive value and a negative value defined within a range of displacement thereof in an urged direction thereof.

In a preferred embodiment of the present invention, the movable element is made of a ferromagnetic material and carries out magnetic pole reversal when it is shifted in an urged direction thereof.

In accordance with another aspect of the present invention, a raising mechanism is provided. The raising mechanism includes the magnetic spring structure constructed as described above. The movable element of the magnetic spring structure urged by an action of a magnetic field of the stationary magnet is stably held at a predetermined position in a range in which a spring constant thereof has a positive value in an urged direction of the movable element.

In accordance with a further aspect of the present invention, a vibration relief mechanism is provided. The vibration relief mechanism includes the magnetic spring structure constructed as described above. Also, it includes a cushioning member capable of exhibiting elastic force substantially in a relative operation direction of load mass directly and indirectly supported on the movable element of the magnetic spring structure. The movable element of the magnetic spring structure urged by an action of a magnetic field of the stationary magnet is arranged so as to be displaceable within a range in which a spring constant thereof has a negative value in an urged direction of the movable element, so that a whole spring constant thereof obtained by a combination with the cushioning member may be falsely substantially zero.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings; wherein:
Fig. 1 is a schematic view showing an embodiment of a magnetic spring structure according to the present invention;
Fig. 2 is a graphical representation showing load-displacement characteristics of the magnetic spring structure of Fig. 1;
Fig. 3 is a schematic view showing an example of a raising mechanism to which the magnetic spring structure shown in Fig. 1 is applied;
Figs. 4 (a) and 4 (b) each are a schematic view showing another example of a raising mechanism to which the magnetic spring structure shown in Fig. 1 is applied;
Figs. 5 (a) to 5 (c) each are a schematic view showing a further example of a raising mechanism to which the magnetic spring structure shown in Fig. 1 is applied;
Fig. 6 is a schematic view showing still another example of a raising mechanism to which the magnetic spring structure shown in Fig. 1 is applied;
Fig. 7 is a schematic view showing yet another example of a raising mechanism to which the magnetic spring structure shown in Fig. 1 is applied;
Fig. 8 is a perspective view showing a still further example of a raising mechanism to which the magnetic spring structure shown in Fig. 1 is applied;
Fig. 9 is a plan view showing arrangement of stationary magnets in the raising mechanism shown in Fig. 8;
Fig. 10 a front elevation view showing a vibration relief model which is an example of a vibration relief mechanism having a magnetic spring structure of the present invention applied thereto;
Fig. 11 is a side elevation view of the vibration relief model shown in Fig. 10;
Fig. 12 is a schematic sectional view of the vibration relief model shown in Fig. 10;
Fig. 13 is a graphical representation showing a load-displacement curve indicating static characteristics of a magnetic spring structure obtained when a permanent magnet is used as a movable element for the magnetic spring structure;
Fig. 14 is a graphical representation showing a vibration transmission rate of a magnetic spring structure which is obtained when a permanent magnet is used as a movable element for the magnetic spring structure;
Fig. 15 is a graphical representation showing a load-displacement curve indicating static characteristics of a magnetic spring structure obtained when iron is used as a movable element for the magnetic spring structure;
Fig. 16 is a graphical representation showing a vibration transmission rate of a magnetic spring structure which is obtained when iron is used as a movable element for the magnetic spring structure and vibration of 0.2mm in amplitude is applied thereto;
Fig. 17 is a graphical representation showing a vibration transmission rate of a magnetic spring structure which is obtained when iron is used as a movable element for the magnetic spring structure and vibration of 1.0mm in amplitude is applied thereto;
Fig. 18 is a graphical representation showing a vibration transmission rate of a magnetic spring structure which is obtained when iron is used as a movable element for the magnetic spring structure and vibration of 2.0mm in amplitude is applied thereto;
Figs. 19 (a) to 19(c) each are a schematic view showing a modification of a configuration of stationary magnets and a movable element constituting a magnetic spring structure or arrangement thereof;
Figs. 20 (a) to 20 (d) each are a schematic view showing another modification of a configuration of stationary magnets and a movable element constituting a magnetic spring structure or arrangement thereof;
Fig. 21(a) is a plan view showing another modification of a stationary magnet; and
Fig. 21(b) is a sectional view of the stationary magnet shown in Fig. 21(a).

### DETAILED DESCRIPTION OF THE PREFERRED EMBODIMENTS

Now, the present invention will be described with reference to the accompanying drawings.

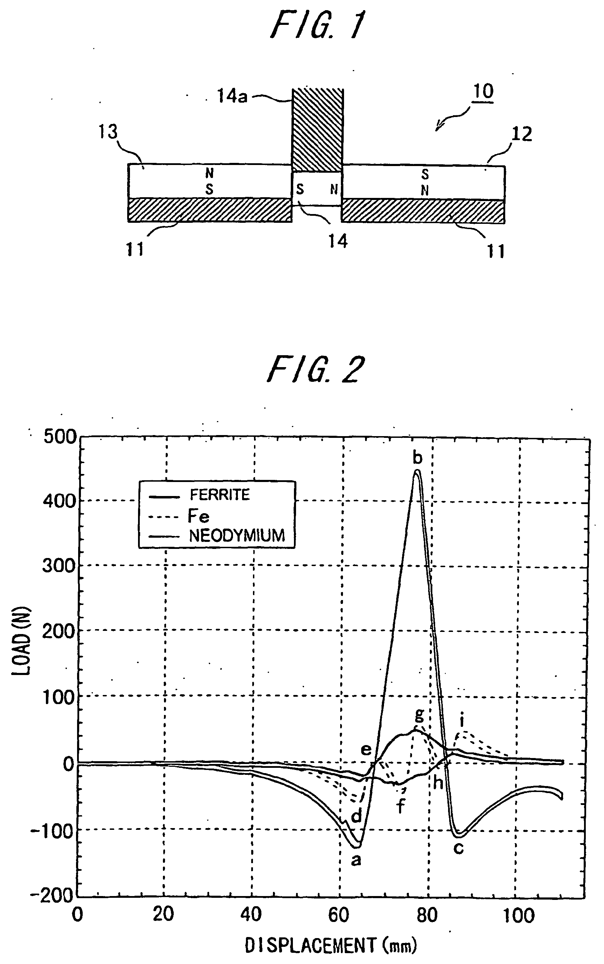

Referring first to Fig. 1, an embodiment of a magnetic spring structure according to the present invention is illustrated. A magnetic spring structure of the illustrated embodiment generally designated at reference numeral 10 includes a holding member 11 and stationary magnets 12 and 13 arranged on the holding member 11 in a manner to be spaced from each other at a predetermined interval in a direction of a surface of the holding member 11 on which the magnets 12 and 13 are placed. The stationary magnets 12 and 13 are so magnetized that a direction of magnetization thereof is vertical in Fig. 1. Also, the stationary magnets 12 and 13 are arranged in such a manner that directions of magnetic poles thereof are opposite to each other.

The magnetic spring structure of the illustrated embodiment also includes a movable element 14 arranged between the stationary magnets 12 and 13 and supported on a holding member 14a made of a non-magnetic material. In the illustrated embodiment, the movable element 14 is constituted by a permanent magnet and arranged so that a direction of magnetization thereof is perpendicular to that of the stationary magnets 12 and 13. The movable element 14 is made of a magnetic material and forms a magnetic circuit in cooperation with the stationary magnets 12 and 13. Alternatively, the movable element 14 may be made of a ferromagnetic material such as iron, ferrite or the like other than a permanent magnet so long as it is urged along a gap between the stationary magnets 12 and 13 which acts as a path for the movable element 14. In the illustrated embodiment, a direction in which the movable element 14 is urged or an urged direction of the movable element 14 is defined to be parallel to the above-described direction of magnetization of the stationary magnets 12 and 13.

The magnetic spring structure 10 constructed as shown in Fig. 1 and including the stationary magnets 12 and 13 of 70 x 35 x 10 (thickness) in size and movable element 14 of 60 x 10 x 10 (thickness) in size was subjected to measurement of load-displacement characteristics. The load-displacement characteristics obtained were as shown in Fig. 2. The stationary magnets 12 and 13 each were constituted by a neodymium-iron-boron magnet (hereinafter also referred to as "neodymium magnet"). The measurement was carried out on movable elements 14 respectively made of neodymium-iron-boron, iron (ferromagnetic material) and ferrite (ferromagnetic material).

Also, in the measurement, the stationary magnets 12 and 13 were supported on the holding member 11 as shown in Fig. 1. The holding member 11 is formed at a portion thereof corresponding to the gap between the stationary magnets 12 and 13 with a through-hole. In the measurement, the load was measured in the form of repulsion force and attraction force between the stationary magnets 12 and 13 and the movable element 14 generated by downwardly passing the movable element 14 between the stationary magnets 12 and 13 and via the through-hole of the holding member 11 in a direction parallel to the direction of magnetization of the stationary magnets 12 and 13. Also, the movable element 14 constituted of a neodymium magnet was downwardly inserted between the stationary magnets 12 and 13 by moving the movable element 14 in a posture which permits it to be attracted by an upper-sidemagnetic pole of the stationary magnets 12 and 13 when it is downwardly inserted between the stationary magnets 12 and 13. For example, supposing that an upper side of the right-side stationary magnet 12 has an S pole and that of the left-side stationary magnet 13 has an N pole as shown in Fig. 1, the permanent magnet constituting the movable element 14 is moved in a posture which permits an N pole thereof to be opposite to the right-side stationary magnet 12 and an S pole thereof to be opposite to the left-side stationary magnet 13. A positive value of the load indicates repulsion force between the stationary magnets 12, 13 and the movable element 14 and a negative value thereof indicates attraction force therebetween. The movable element 14 was reciprocated at a speed of 100 mm/min and a displacement stroke of 110 mm.

Fig. 2 indicates that when the movable element 14 is constituted by a neodymium magnet, approach of the movable element 14 to the stationary magnets 12 and 13 permits an increase in attraction force and it exhibits substantially linear spring characteristics in a region between a point a at which the attraction force is maximum and a point b at which the repulsion force is maximum. Also, it indicates that a spring constant of the movable element 14 indicating an inclination of a variation curve is positive. Further movement of the movable element 14 provides a point c at which downward repulsion is maximum. Thus, it exhibits substantially linear spring characteristics and a negative spring constant in a region between the points b and c.

The movable element 14 made of iron (Fe) leads to an increase in attraction force with approach of the movable element 14 to the stationary magnets 12 and 13. Further movement of the movable element 14 through a point d at which the attraction force is maximum permits it to reach a peak (point e) at which the spring constant is reversed from a positive value to a negative value. Then, a peak (point f) at which the attraction force is maximum appears at a predetermined position in the direction of magnetization thereof between the stationary magnets 12 and 13 and then a further peak (point g) at which the spring constant is reversed from a positive value to a negative value appears , followed by appearance of still another peak (point peak h). Thus, displacement of the movable element 14 in the urged direction of the movable element 14 permits the movable element 14 to exhibit characteristics having the two peaks (points e and g) at which the spring constant is reversed from a positive value to a negative value and the three peaks (points d, f and h) at which the spring constant is reversed from a negative value to a positive value in a range in which a magnetic field of the stationary magnets 12 and 13 affects or acts. Also, any displacement of the movable element 14 through the two peaks (points e and g) at which the spring constant is reversed from a positive value to a negative value permits the movable element 14 to exhibit linear spring characteristics and have a positive spring constant between the points d-e and between the points f-g and a negative spring constant between the points e-f and between the points g-h.

When the movable element 14 is made of ferrite, downward movement of the movable element 14 prevents the spring constant from being excessively increased, although it causes repulsion force to be maximum at a predetermined position between the stationary magnets 12 and 13. However, the movable element made of ferrite causes reversal of the magnetic poles to occur between forward movement thereof and rearward movement thereof during a reciprocal stroke thereof, to thereby exhibit characteristics increased in hysteresis loss.

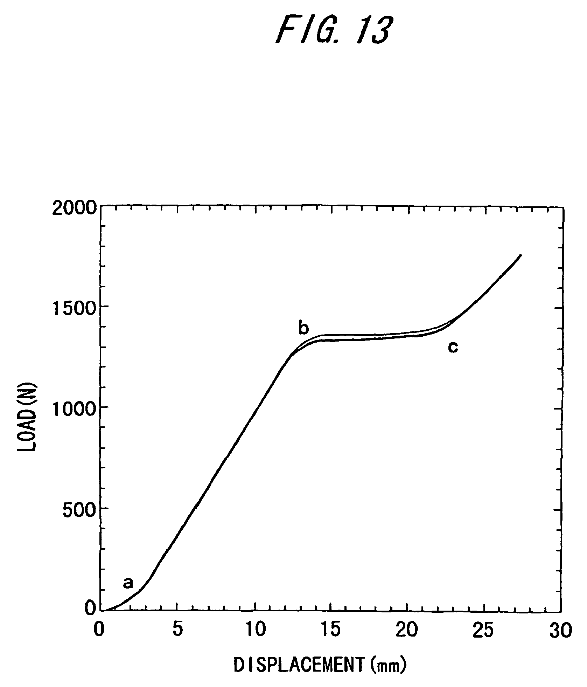

When the movable element 14 is made of neodymium or iron, it exhibits substantially the same locus between forward movement thereof and rearward movement thereof in a reciprocal stroke thereof, although it exhibits characteristics different from each other as described above. Thus, utilizing of a range in which the spring characteristics of the movable element 14 are linearly varied permits the magnetic circuit to be suitably applied to a raising mechanism or a vibration relief mechanism having characteristics wherein a spring constant thereof is falsely substantially zero. More specifically, in each case, a range of the characteristics wherein the spring constant has a positive value may be utilized for a raising mechanism for raising an object and a range thereof wherein it has a negative value may be combined with a cushioning member having a positive spring constant such as a metal spring, a rubber material or the like to provide a vibration relief mechanism wherein a whole spring constant due to the combination is substantially zero within a predetermined range of displacement thereof (see Fig. 13).

Whereas, the movable element 14 made of ferrite causes an increase in hysteresis, resulting in being hard to provide a vibration relief mechanism having a spring constant which is falsely substantially zero when it is combined with a cushioning member such as a metal spring or the like. Nevertheless, it exhibits increased damping force due to reversal of the magnetic poles. Thus, the movable element made of ferrite may be solely used for a magnetic spring structure. Alternatively, depending on load mass, the movable element may be combined with a cushioning member such as a metal spring or the like to effectively provide a damping mechanism.

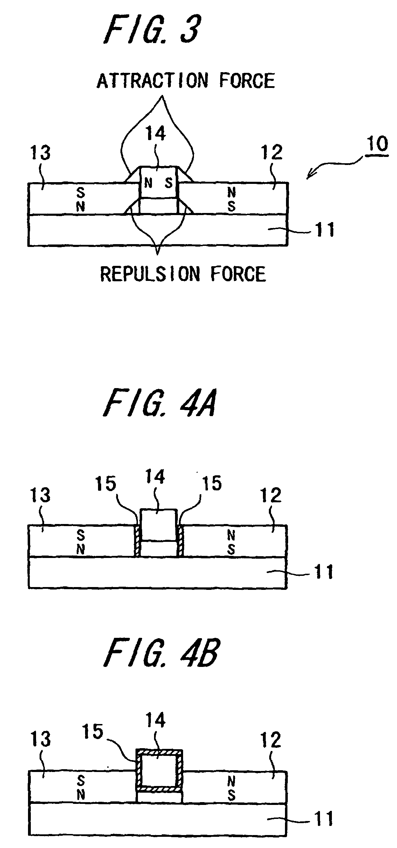

Figs. 3 to 7 each schematically show application of the magnetic spring structure 10. of the illustrated embodiment thus constructed to a raising mechanism by way of example. In Fig. 3, the movable element 14 is constituted by a permanent magnet (neodymium magnet). Also, the stationary magnet 12 arranged on the right-hand side has an N pole defined on an upper side thereof and the stationary magnet 13 on the left-hand side has an S pole defined on an upper side thereof. Further, the holding member 11 is arranged under the stationary magnets 12 and 13 to support them thereon. In addition, in order to permit the movable element 14 to be moved or displaced in an upward direction, the permanent magnet constituting the movable element 14 is so arranged that an S pole thereof is opposite to the right-side stationary magnet 12 and an N pole thereof is opposite to the left-side stationary magnet 13. Such arrangement permits repulsion force to act between an S pole of the right-side stationary magnet 13 defined on a lower side thereof and the S pole of the movable element 14 and between an N pole of the left-side stationary magnet 13 defined on a lower side thereof and the N pole of the movable element 14, resulting in the movable element 14 being upwardly shifted so as to be upwardly released from the stationary magnets 12 and 13. Then, the movable element 14 thus shifted has attraction force applied between the upper-side N pole of the right-side stationary magnet 12 and the S pole of the movable element 14 and between the upper-side S pole of the left-side stationary magnet 13 and the N pole of the movable element 14. The repulsion force and attraction force thus acting are balanced with each other, so that the movable element 14 may be stably supported while being kept raised by a predetermined distance due to upward displacement thereof. Such a balanced position or a position at which the movable element 14 is stably supported while being raised is indicated by an intersection between an a-b interval and a scale at which load is zero.

The raising mechanism to which the magnetic spring structure 10 is applied permits the movable element 14 to be stably raised without any additional means such as a linkage, a guide mechanism or the like. Thus, the raising mechanism is simplified in structure, small-sized and reduced in manufacturing cost, as compared with a conventional raising mechanism. The raising mechanism of the present invention facilitates maintenance thereof because it eliminates a necessity of including any additional means as described above.

It is not required to substantially conform a width of the movable element 14 to a gap between the stationary magnets 12 and 13 so long as the movable element 14 can be shifted along the gap while being arranged therein. However, when the width is formed so as to substantially conform to the gap as shown in Fig. 3, the stationary magnets 12 and 13 act as a guide for the movable element 14 during movement thereof. Also, in order to ensure smoother movement of the movable element 14 between the stationary magnets 12 and 13, an inner surface of each of the stationary magnets 12 and 13 or an outer surface of the movable element 14 may have a material 15 for reducing frictional resistance therebetween such as PTFE (polytetrafluoroethylene) or the like deposited thereon by application, adhesion or the like, as shown in Figs. 4(a) and 4(b).

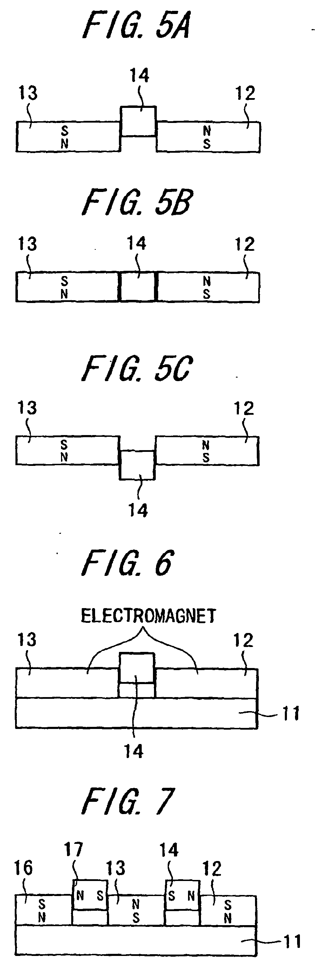

When the stationary magnets 12 and 13 and movable element 14 each are constituted by a permanent magnet of a single layer, the movable element 14 is moved in any one direction depending on polarities thereof opposite to the stationary magnets 12 and 13. When the movable element 14 is made of a ferromagnetic material such as iron or the like, a direction of magnetization of the movable element 14 by an action of a magnetic field generated by the stationary magnets 12 and 13, as shown in Figs. 5(a) to 5 (c) , permits the movable element 14 to be stably held while being shifted in both upward and downward directions even when the magnets 12 and 13 are constructed into a single layer. Thus, the movable element 14 is balanced at each of an intersection between an interval or range of points f-g and a scale at which load is zero and that between an interval of points h-i and the scale.

In the illustrated embodiment, a permanent magnet is used for each of the stationary magnets 12 and 13 constituting the magnetic spring structure 10. Alternatively, an electromagnet may be substituted for the permanent magnet as shown in Fig. 6. Use of the electromagnet for this purpose permits movement of the movable element 14 to be controlled by operation of ON/OFF switching an excitation current fed to the electromagnet. Also, in the illustrated embodiment, the single movable element 14 is arranged between two such stationary magnets 12 and 13 arranged so as to be spaced from each other at a predetermined interval in the direction of the surface of the holding member 11 on which the magnets 12 and 13 are placed. Alternatively, the illustrated embodiment may be constructed in such a manner as shown in Fig. 7. More particularly, three such stationary magnets 12, 13 and 16 are arranged on the holding member 11 while keeping each adjacent two of the magnets spaced from each other at predetermined intervals in the direction of the surface of the holding member on which the stationary magnets are placed. Also, two movable elements 14 and 17 are arranged between the stationary magnets 12 and 13 and between the stationary magnets 13 and 16, respectively. Of course more stationary magnets and movable elements may be arranged in a like manner.

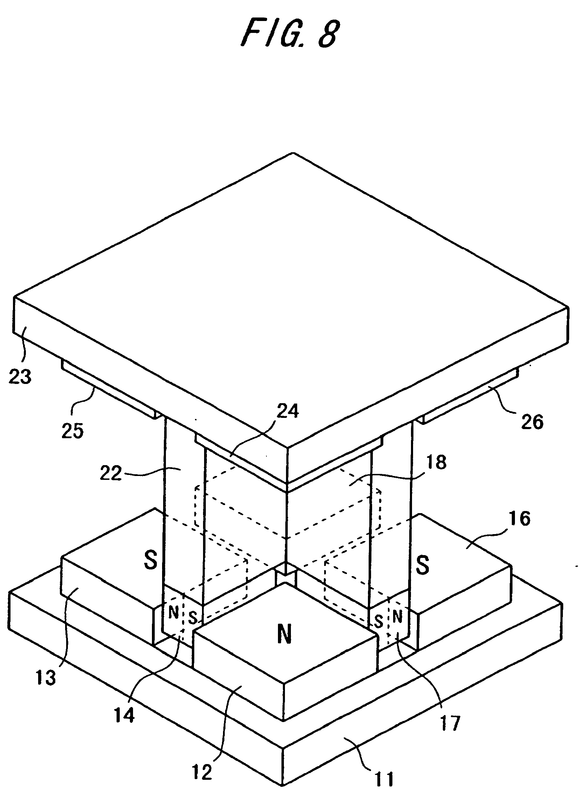

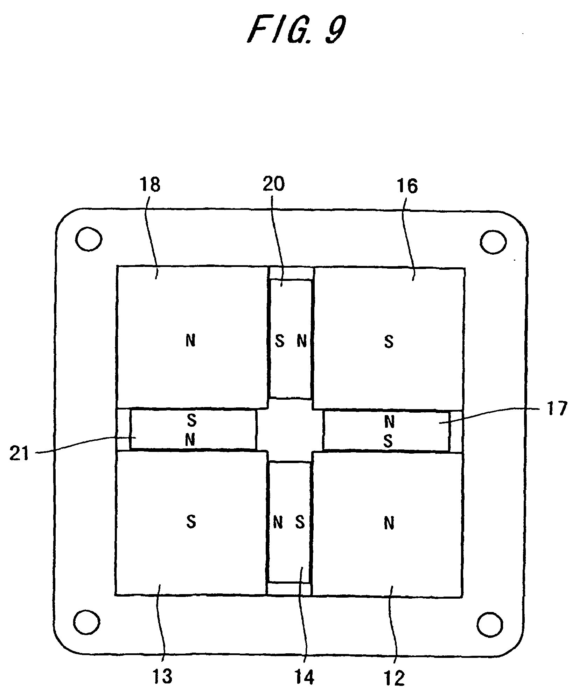

Arrangement of the stationary magnets and movable element (s) constituting the magnetic spring structure 10 is limited to the above wherein they are arranged in juxtaposition to each other in a row in the direction of the surface of the holding member on which they are placed. Thus, it may be carried out as shown in Figs. 8 and 9 by way of example. More specifically, four stationary magnets 12, 13, 16 and 18 are arranged on the holding member 11 in a lattice-like manner so that each adjacent two stationary magnets may be spaced from each other at an equal interval and have polarities defined opposite to each-other. Then, permanent magnets constituting movable elements 14, 17, 20 and 21 are arranged between the respective two stationary magnets so that a direction of magnetization thereof is perpendicular to a direction of magnetization of the stationary magnets, respectively. In this instance, in order to ensure that four such movable elements 14, 17, 20 and 21 may concurrently and positively carry out operation between the respective two stationary magnets, the movable elements 14, 17, 20 and 21 may be supported on a holding member 22 which is formed into a cruciform configuration. In order to permit the movable elements 14, 17, 20 and 21 each constituted by a permanent magnet to exhibit magnetic force effectively acting on the stationary magnets, the support member 22 is preferably formed of a non-magnetic material such as synthetic resin or the like.

When the magnetic spring structure 10 may be used as a raising mechanism, the support member 22 may be provided on an end surface thereof opposite to a surface thereof on which the movable elements 14, 17, 20 and 21 are supported with a base 23 for supporting the support member 22 thereon, so that four permanent magnets 24, 25 and 26, of which one is omitted from Fig. 8 for the sake of brevity, may be arranged on the base 23 while rendering the same polarities of the stationary magnets 12, 13, 16 and 18 and permanent magnets 24, 25 and 26 opposite to each other. This permits a repulsive magnetic field to be generated between the stationary magnets 12, 13, 16 and 18 and the permanent magnets 24, 25 and 26, so that the movable elements 14, 17, 20 and 21 may be more stably supported while being raised.

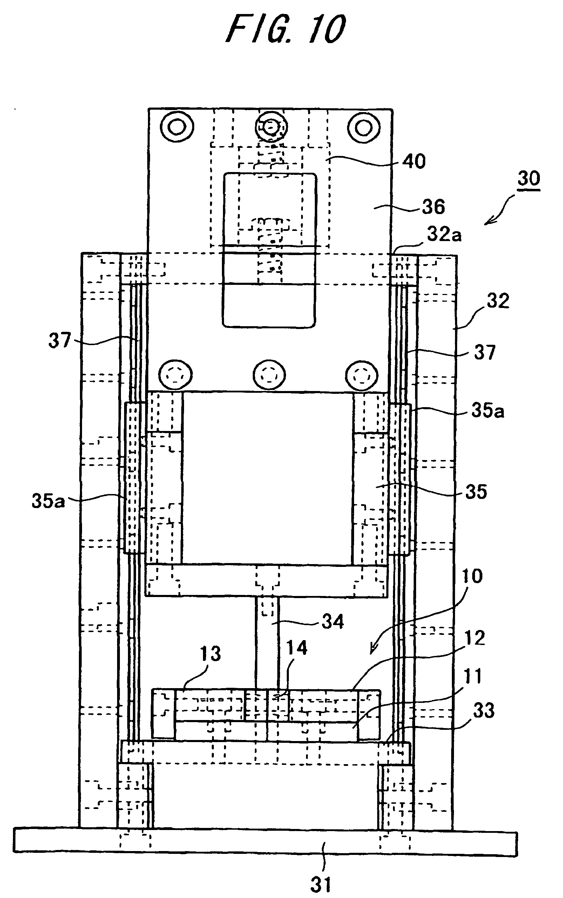

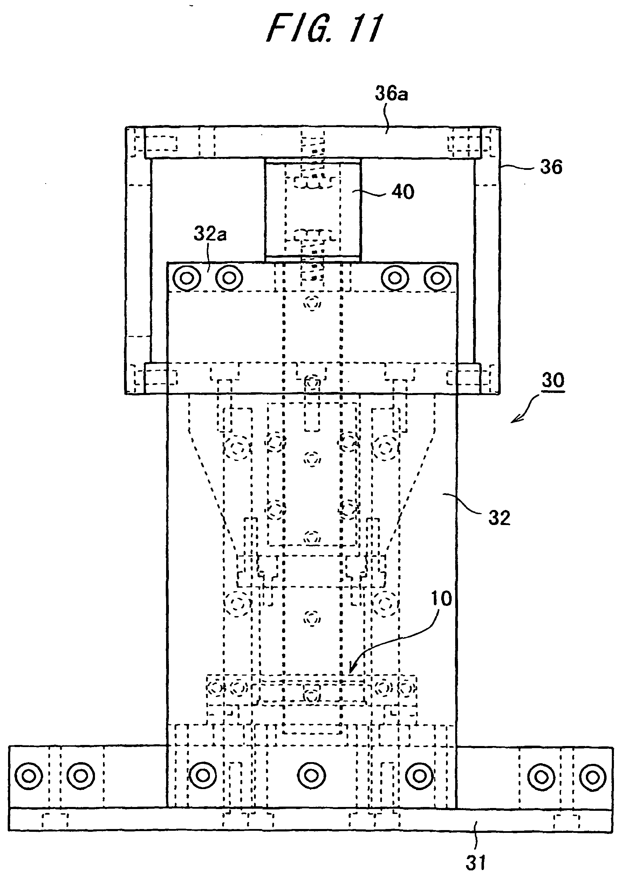

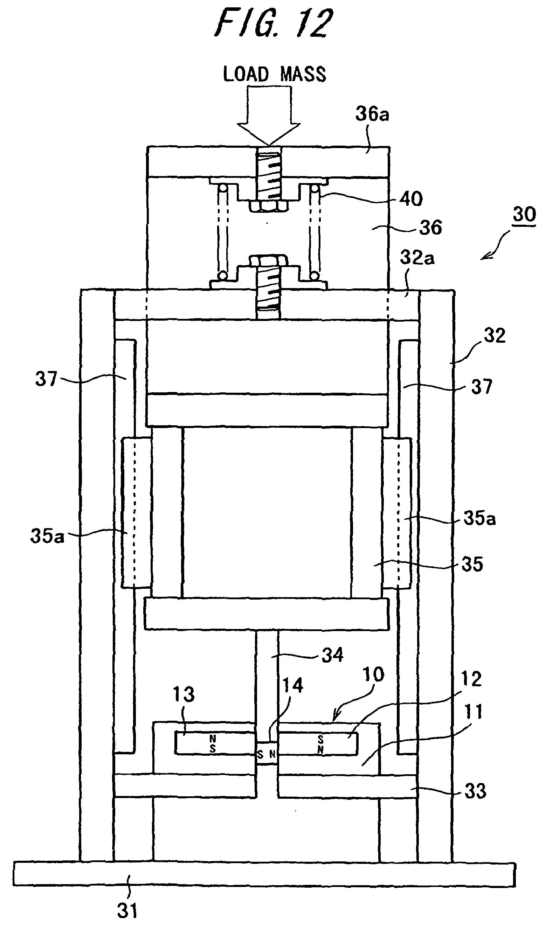

Now, a vibration relief mechanism in which the magnetic spring structure of the present invention is incorporated will be described with reference to Figs. 10 to 12, which show a vibration relief model 30 which is an example of a vibration relief mechanism having the above-described magnetic spring structure 10 incorporated therein. In Figs. 10 to 12, reference numeral 31 designates a base plate. In practice, the base plate 31 is mounted on a frame of a car body or the like. In a vibration applying test using the vibration relief model 30, the base plate 31 is mounted on a table (not shown) of a test apparatus. The base plate 31 is mounted thereon with a housing 32 of a box-like shape of which front and rear walls are open. The housing 32 has a pedestal 33 fixed thereon while being located at a position in an interior thereof in proximity to a bottom thereof. The stationary magnets 12 and 13 constituting the magnetic spring structure 10 are supported on the pedestal 33. More specifically, the holding member 11 made of a non-magnetic material and acting as the support member is fixed on the pedestal 33 and then the stationary magnets 12 and 13 in a pair are fixed on the holding member 11 so as to be spaced from each other at a predetermined interval. The movable element 14 is arranged between the stationary magnets 12 and 13.

The movable element 14 is held on a distal or lower end of a connection rod 34, which has an upper end connected to one end of a vertically moving member 35. The vertically moving member 35 is mounted on the other end thereof with a load mass support member 36. The load mass support member 36 is constructed so as to support load mass on an upper portion thereof. The vertically moving member 35 is provided on each of both sides thereof with a slide guide 35a, which is adapted to slidably engage each of rail members 37 arranged in a manner to vertically extend in the housing 32, to thereby stabilize vertical movement of the vertically movable member 35.

The load mass support member 36 is formed into a substantially U-shape and connected to the vertically moving member 35 in a manner to hold an upper wall 32a of the housing 32 therein while surrounding it from above. The load mass support member 36 includes an upper wall 36a and is arranged so as to define a gap between the upper wall 36a thereof and the upper wall 32a of the housing 32. The vibration relief model 30 includes a coiled spring 40 received in the gap between the upper walls 32a and 36a. The coiled spring 40 constitutes a cushioning member elastically deformable substantially in a direction of relative movement of load mass supported through the connection rod 34, vertically movable member 35 and load mass support member 36 or a direction of movement of the movable element 14 relative to the stationary magnets 12 and 13 (or an urged direction of the movable element 34). The cushioning member may be made of a metal spring, a rubber material or the like. Arrangement of the coiled spring 40 is not limited to any specific manner so long as it is elastically deformable substantially in the direction of relative movement of the movable element 14. For example, it may be arranged in the housing 32.

Fig. 13 shows test data on a load-displacement curve which indicates static characteristics of the above-described vibration relief model 30 in which the movable element 14 constituted by the neodymium-iron-boron magnet (neodymium magnet) is incorporated. As will be noted from Fig. 13, elastic force of the coiled spring 40 which exhibits a positive linear spring constant has a range in which the magnetic spring structure 10 has a negative spring constant superposed thereon in a region between the points b-c in Fig. 2, so that load is not substantially varied in the region between the points b-c irrespective of an increase in displacement as shown in Fig. 13, resulting in the spring constant which is indicated by an inclination of the curve being substantially zero. Thus, when setting is made so that a range of displacement of the movable element 14 relative to the stationary magnets 12 and 13 in the magnetic spring structure 10 while supporting or bearing load mass thereon falls in the region between the points b-c in Fig. 2 and adjustment is carried out so that a spring constant of the coiled spring 40 and an absolute value of a spring constant of the magnetic spring structure 10 in the range between the points b-c in Fig. 2 are substantially coincident with each other, transmission of vibration may be effectively reduced or eliminated while preventing whole elastic force thereof from being varied.

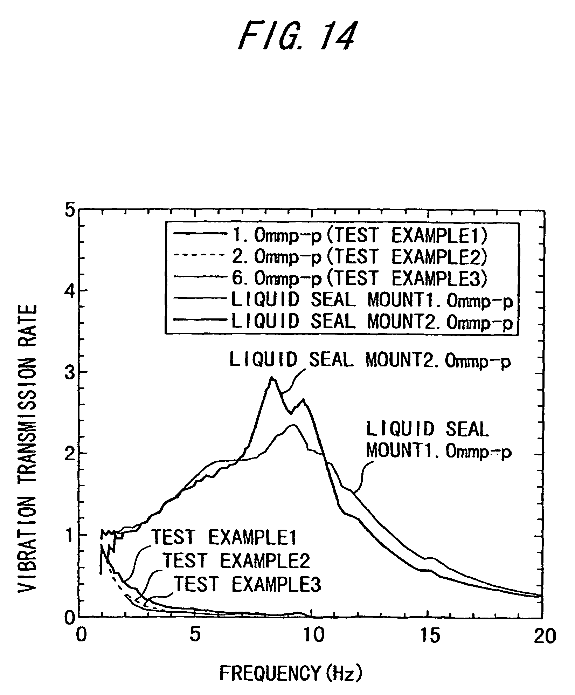

Fig. 14 shows vibration transmission characteristics of the vibration relief model 30. In Fig. 14, Test Examples 1 to 3 each indicate data on the vibration relief model 30 in which the movable element 14 used in the test of Fig. 13 is constituted by the neodymium magnet. The test was carried out in a manner to initially set the movable element 14 at a position substantially neutral in the range between the points b-c in Fig. 2 while bearing load mass on the load mass support member 36 and then fix the base plate 31 on a table of a vibration applying apparatus, resulting in a vibration transmission rate of load mass with respect to frequencies being measured. Also, for comparison, a vibration transmission rate was measured on a conventional "liquid seal mount" or a damping mechanism in which liquid is sealed in a rubber mount used as an engine mount while supporting a predetermined magnitude of mass thereon. In Fig. 14, for example, "1.0mmp-p" means that a distance between a peak obtained when it is deflected in one direction and that obtained when it is deflected in the other direction is 1.0 mm.

As will be apparent from Fig. 14, Test Examples 1 to 3 on the vibration relief model 30 of the illustrated embodiment each are highly reduced in vibration transmission rate as compared with the conventional liquid seal mount (Comparative Examples). In particular, Test Examples each permit a resonance peak to be moved to a low-frequency region as compared with Comparative Examples , to thereby reduce vibration over a wide range of between 3Hz sensitively felt by the human body or more and a high-frequency region.

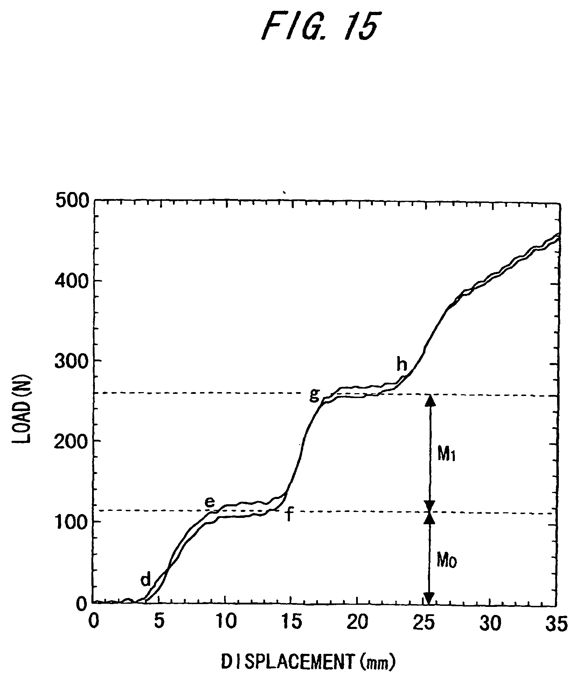

Fig. 15 shows data on a load-displacement curve indicating static characteristics of the vibration relief model 30 wherein the movable element 14 of the magnetic spring structure 10 constituting the vibration relief model 30 is made of iron which is a ferromagnetic material. The test was carried out in substantially the same procedure as that in Fig. 13. The movable element 14 made of iron as shown in Fig. 2 exhibits a negative spring constant at two points. Thus, as will be noted from Fig. 15, a range of the magnetic spring structure 10 exhibiting a negative spring constant is superposed on elastic force of the coiled spring 40 exhibiting a positive linear spring constant in two regions between the points e-f and between the points g-h in Fig. 2, resulting in load being kept from being varied irrespective of an increase in displacement, so that the spring constant indicated by an inclination of the curve may be substantially zero.

Thus, when setting is made so that a range of displacement of the movable element 14 relative to the stationary magnets 12 and 13 in the magnetic spring structure 10 while supporting different load mass M0 or M0+M1 thereon falls in the region between the points e-f or g-h in Fig. 2 and adjustment is carried out so that a spring constant of the coiled spring 40 and an absolute value of a spring constant of the magnetic spring structure 10 in the range between the points e-f or g-h in Fig. 2 are substantially coincident with each other, transmission of vibration may be effectively reduced or eliminated while preventing whole elastic force thereof from being varied in each of the ranges.

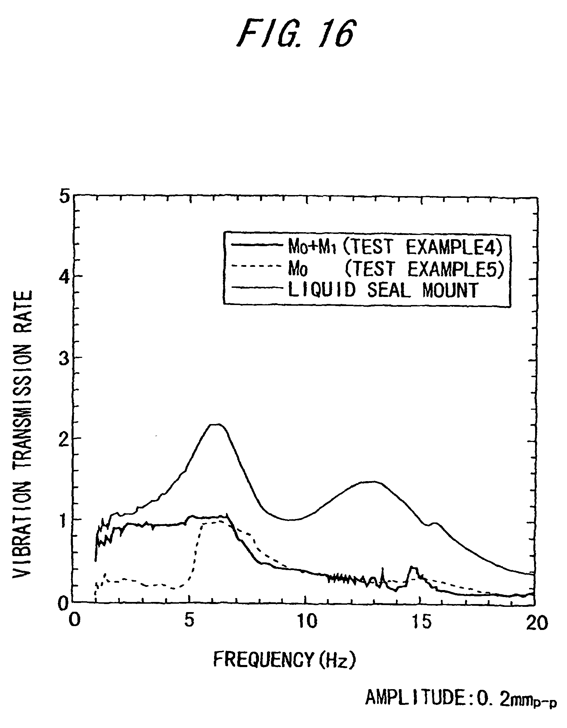

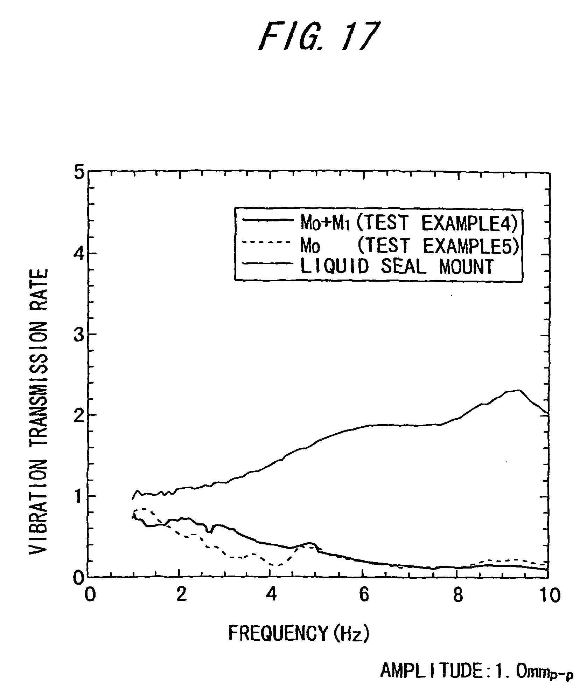

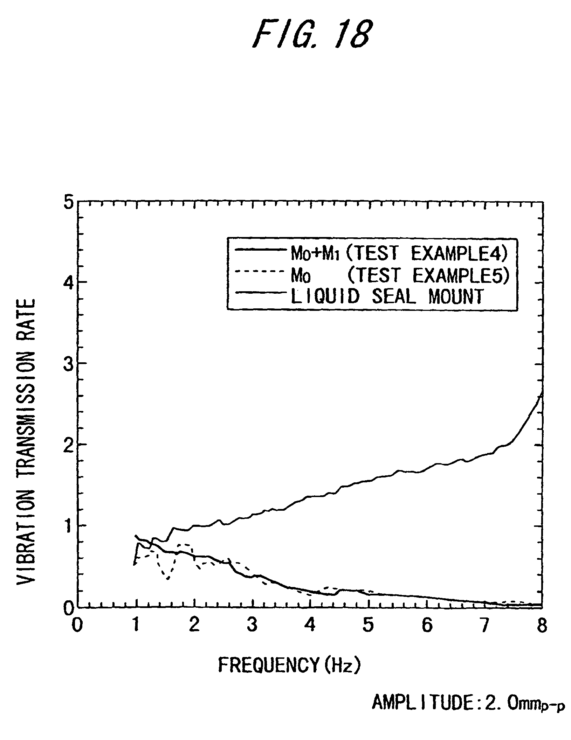

Figs. 16 to 18 each show vibration characteristics of the vibration relief model 30 wherein the movable element 14 of the magnetic spring structure 10 constituting the vibration relief model 30 is made of iron. Measurement of the vibration characteristics was made while varying an amplitude between peaks among 0.2mm, 1.0mm and 2.0mm. Data on Test Example 4 were measured while setting load mass at M0+M1 and data on Test Example 5 were obtained by setting it at M0. For comparison, data measured when mass at a predetermined level was supported on a liquid seal mount as in Fig. 14 are likewise shown in Figs. 16 to 18 (Comparative Examples) . The test was carried out in substantially the same manner as in Fig. 14.

Figs. 16 to 18 clearly indicate that Test Examples of the present invention each are highly decreased in vibration transmission rate, to thereby effectively accomplish vibration relief as compared with Comparative Examples of the prior art.

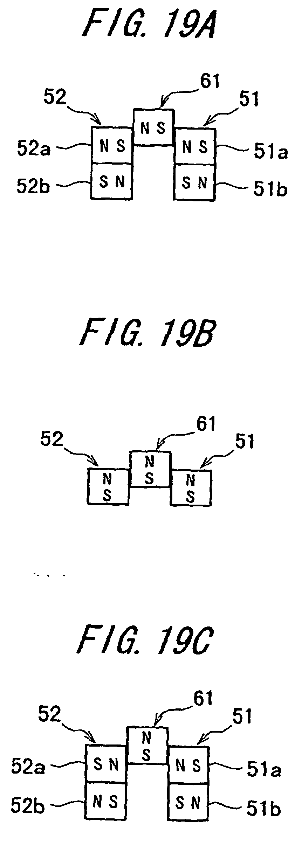

The magnetic spring structure and vibration relief mechanism of the present invention are not limited to the above-described embodiments. For example, the stationary magnets and movable element incorporated in the magnetic spring structure and arrangement thereof may be configured and arranged in such a manner as shown in Figs. 19(a) to 20 (d). In each of Figs. 19 (a) to 20 (d) , an action of a magnetic field generated by the stationary magnets on the movable element is varied depending on a position to which the movable element is shifted, so that the movable element may be urged in at least any one direction, resulting in the magnetic spring structure positively exhibiting its function. Thus, arrangement shown in each of Figs. 19(a) to 20(d) permits a raising mechanism or vibration relief mechanism to be satisfactorily provided while being simplified in construction.

More specifically, arrangement shown in Fig. 19 (a) is so configured that stationary magnets 51 and 52 in a pair arranged so as to be spaced from each other in a direction of arrangement thereof are formed by laminating two magnets 51a and 51b on each other and laminating two magnets 52a and 52b on each other, respectively. The magnets 51a and 51b and magnets 52a and 52b are arranged so that a direction of magnetization thereof conforms to the direction of arrangement thereof. The movable element 61 is arranged between the stationary magnets 51 and 52 in a pair so that a direction of magnetization thereof is parallel to the direction of magnetization of the magnets 51a, 51b and magnets 52a, 52b.

Arrangement shown in Fig. 19(b) is so configured that a direction of magnetization of each of the stationary magnets 51 and 52 and a movable element 61 is defined to be vertical. In arrangement of Fig. 19 (c) , the stationary magnets 51 and 52 are formed by laminating two magnets 51a and 51b on each other and laminating two magnets 52a and 52b on each other, respectively, as in Fig. 19(a). The movable element 61 is so arranged that a direction of magnetization thereof is perpendicular to that of magnetization of the magnets 51a, 51b and 52a, 52b of the stationary magnets 51 and 52.

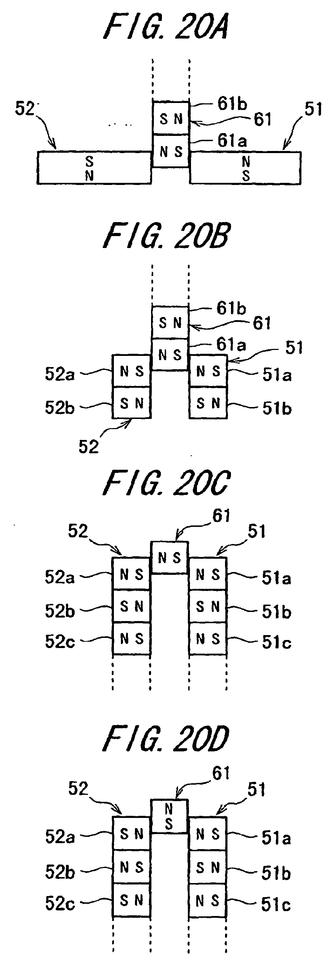

In Fig. 20 (a) , the movable element 61 is so arranged that a direction of magnetization thereof is perpendicular to that of magnetization of the stationary magnets 51 and 52 as in Fig. 1. However, Fig. 20 (a) is different from Figs. 1 in that the movable element 61 is formed by laminating two magnets 61a and 61b on each other. Such construction of the movable element 61 permits the movable element 61 to have a plurality of peaks at which a spring constant thereof is reversed between a positive value and a negative value in a range of displacement thereof, so that the movable element 61 may exhibit substantially the same function and advantage as that made of a ferromagnetic material such as iron or the like shown in Fig. 5.

In Fig. 20 (b), the stationary magnets 51 and 52 are formed by laminating two magnets 51a and 51b on each other and laminating two magnets 52a and 52b on each other, respectively, as in Fig. 19(a). Also, the movable element 61 is likewise formed by laminating two magnets 61a and 61b on each other. In Fig. 20 (c) , the stationary magnets 51 and 52 are respectively formed by laminating three magnets 51a, 51b and 51c on each other and laminating three magnets 52a, 52b And 52c on each other. In Fig. 20 (d) , the stationary magnets 51 and 52 are formed by laminating three magnets 51a, 51b and 51c on each other and laminating three magnets 52a, 52b and 52c on each other, respectively. Further, the movable element 61 is so arranged that a direction of magnetization thereof is perpendicular to that of the magnets 51a, 51b, 51c, 52a, 52b and 52c. The above-described arrangement shown in each of Figs. 20 (b) to 20 (d) permits repulsion force to be changed at a plurality of points within a range of displacement of the movable element 61, so that the movable element 61 may have a plurality of peaks at which a spring constant is reversed between a positive value and a negative value.

In the arrangement shown in each of Figs. 19 (a) to 20(d), the stationary magnets and/or movable element are formed by lamination of a plurality of magnets. The number of magnets to be laminated is not limited to any specific range.

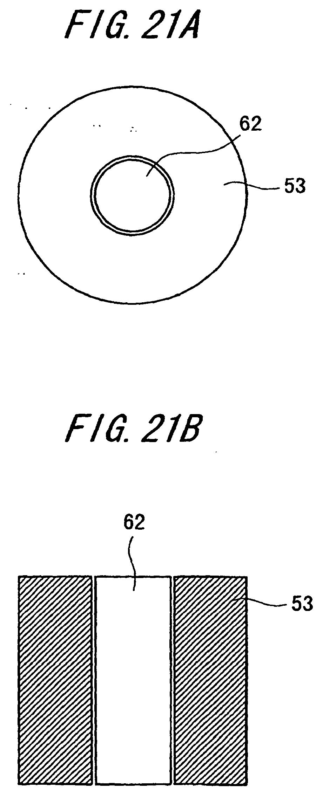

Also, when the stationary magnets arranged outside the movable element are constituted by members different from each other as shown in Fig. 1, it is required that they are arranged so as to interpose the movable element therebetween in a direction of arrangement thereof. Alternatively, their illustrated embodiment may be configured in such a manner as shown in Fig. 21. More specifically, a stationary magnet 53 is formed into a cylindrical shape such as a circularly cylindrical shape, a rectangularly cylindrical shape or the like to provide an internal gap 53a therein, which acts as a passage for a movable element 62. Even in such a cylindrical configuration of the stationary magnet 53, magnets constituting the stationary magnet 53 and movable element 62 may be arranged in any desired manner or layout. In this regard, when the stationary magnet 53 is formed into a rectangularly cylindrical shape, it is subjected to a configurational restriction, resulting in being limited to such arrangement as shown in Fig. 19(b), Fig. 19 (c) or Fig. 20(d) wherein magnetic poles are symmetric from each other with the movable element 62 being interposed therebetween.

In addition, the vibration relief model 30 of the illustrated embodiment has the coiled spring 40 incorporated therein so as to act as a cushioning member. However, it is not limited to such a metal spring as described above, a rubber material or the like so long as it exhibits elastic force substantially in a relative movement direction of load mass. For example, as shown in Fig. 8, the permanent magnets 24, 25 and 26 may be arranged on the stationary magnets 12, 13, 16 and 18 of the magnetic spring structure 10 in a manner to render the same polarities thereof opposite to each other, so that a cushioning mechanism constituted by a magnetic circuit having repulsion force formed therebetween may be provided as a cushioning member. In this instance, the thus-provided cushioning member is hard to exhibit linear spring characteristics as compared with a metal spring or the like. However, suitable adjustment of intensity of an magnetic field generated by each of the stationary magnets 12, 13, 16 and 18 and movable elements 14, 17, 20 and 21 constituting the magnetic spring structure 10, as well as the permanent magnets 24 , 25 and 26 constituting the cushioning mechanism in cooperation with the stationary magnets permits the vibration relief model 30 to exhibit a whole spring constant of substantially zero. When the cushioning member is constituted by such a magnetic circuit, the whole vibration relief mechanism may be constituted by only the magnetic circuit, resulting in further simplifying construction thereof and facilitating maintenance thereof. The number of stationary magnets and permanent magnets constituting the cushioning mechanism provided by the magnetic circuit and arrangement thereof may be varied as required. Thus, they are not limited to Fig. 8.

As can be seen from the foregoing, the magnetic spring structure of the present invention is so constructed that the stationary magnet is arranged outside the movable element made of a magnetic material while forming a gap acting as a passage for the movable element, to thereby urge the movable element by an action of an magnetic field generated thereby. Such configuration of the present invention permits the magnetic circuit constituted by the stationary magnets and movable element arranged in such predetermined positional relationship to be solely utilized as a damping apparatus. Also, it permits a whole spring constant of the magnetic circuit combined with a cushioning member such as a metal spring, rubber or the like to be falsely set to be substantially zero. Thus, the present invention provides a magnetic spring structure and a vibration relief mechanism which can be simplified in construction and manufactured at a low cost as compared with the prior art. Further, the present invention permits the magnetic circuit to solely constitute a raising mechanism for relatively raising load mass. In this regard, the present invention eliminates a necessity of arranging a linkage and a guide mechanism which are required for the conventional raising mechanism utilizing repulsion force between the magnets, to thereby simplify construction of the rasing mechanism, reduce a manufacturing cost thereof and facilitate maintenance thereof.

### ANNEX AND EXPLANATIONS

1. The sizes in the last paragraph on page 8 are in millimetres.
2. The term "dynamic magnification" is the ratio kd/ks, wherein ks is the static spring constant and kd is the storage spring constant.
3. The meaning of the description "so as to permit a whole spring constant thereof to be set to be falsely substantially zero" is as follows:
   According to Hooke's Law, the spring constant "k" is defined by the formula "k=F (load)/x (displacement)".
   For example, in Fig. 2 of this application, the change of load to the displacement between Point b and Point c is decreasing as opposed to change of the load between Point a and Point b. So, "F" in the above-mentioned formula shows a negative change in the range in which this load is decreasing. Therefore, the spring constant between Point b and Point c is given by the formula "k=-F/x" which may be written as "-k=F/x".
   Thus, when the coil spring which has the positive linear spring constant is incorporated with the magneto spring mechanism which has a negative spring constant, as long as each absolute value of the negative spring constant and a positive spring constant is almost the same, the total spring constant is given by "(-k)+(k)" and may become substantially zero.
4. The vibration transmission ratio is the ratio of the input acceleration and the output acceleration.

## Claims

1. A magnetic spring structure comprising:
at least one movable element (14) made of a magnetic material; and
at least two stationary magnets (12, 13) arranged outside said movable element so as to define a gap acting as a passage for said movable element;
said stationary magnet urging said movable element by an action of a magnetic field generated thereby,
the stationary magnets are arranged so as to be spaced from each other at a predetermined interval in a direction of arrangement of said stationary magnets, to thereby define the gap therebetween, said movable element (14) being constituted by a permanent magnet which is so arranged that a direction of magnetization thereof is perpendicular to a direction of magnetization of said stationary magnets (12, 13), **characterized in that** said stationary magnets are arranged in such a manner that magnetic poles of said stationary magnets adjacent to each other in said direction of arrangement of said stationary magnets are opposite to each other.

2. A magnetic spring structure as defined in claim 1, wherein said movable element (14) is made of a ferromagnetic material and has a plurality of points at which a spring constant thereof is reversed between a positive value and a negative value defined within a range of displacement thereof in an urged direction thereof.

3. A magnetic spring structure as defined in claims 1 or 2, wherein said movable element (14) is made of a ferromagnetic material and carries out magnetic pole reversal when it is shifted in an urged direction thereof.

4. A magnetic spring structure as defined in any one of the preceding claims, wherein said stationary magnet (12, 13) is constructed into a laminated structure.

5. A magnetic spring structure as defined in any one of the preceding claims, wherein said movable element (14) is constructed into a laminated structure.

6. A raising mechanism comprising said magnetic spring structure defined in any one of claims 1 to 5, wherein said movable element (14) urged by an action of a magnetic field of said stationary magnet (12, 13) is stably held at a predetermined position in a range in which a spring constant thereof has a positive value in an urged direction of said movable element.

7. A vibration relief mechanism comprising:
said magnetic spring structure defined in any one of claims 1 to 5; and
a cushioning member capable of exhibiting elastic force substantially in a relative operation direction of load mass directly and indirectly supported on said movable element of said magnetic spring structure;
said movable element urged by an action of a magnetic field of said stationary magnet is arranged so as to be displaceable within a range in which a spring constant thereof has a negative value in an urged direction of said movable element, so that a whole spring constant thereof obtained by a combination with said cushioning member may be substantially zero.

## Patentansprüche

1. Magnetfederaufbau, umfassend:
wenigstens ein bewegliches Element (14) aus einem magnetischen Material; und
wenigstens zwei stationäre Magneten (12, 18), die außerhalb des beweglichen Elements angeordnet sind, um einen Spalt zu definieren, der als ein Durchgang für das besagte bewegliche Element dient;
wobei der stationäre Magnet das bewegliche Element durch die Wirkung eines **dadurch** erzeugten Magnetfelds beaufschlagt,
die stationären Magneten derart angeordnet sind, dass sie um einen vorbestimmten Abstand in Richtung der Anordnung der stationären Magnete beabstandet sind, um **dadurch** den Spalt dazwischen zu definieren, wobei das bewegliche Element (14) durch einen Permanentmagneten gebildet ist, der derart angeordnet ist, dass eine Magnetisierungsrichtung davon senkrecht zu einer Magnetisierungsrichtung der stationären Magneten (12, 13) verläuft, **dadurch gekennzeichnet, dass** die stationären Magneten derart angeordnet sind, dass die Magnetpole der stationären Magneten benachbart zueinander in der Richtung der Anordnung der stationären Magneten entgegengesetzt zueinander liegen.

2. Magnetischer Federaufbau nach Anspruch 1, wobei das bewegliche Element (14) aus einem ferromagnetischen Material gebildet ist und mehre Punkte aufweist, an denen eine Federkonstante davon zwischen einem positiven Wert und einem negativen Wert, die in einem Bereich des Versatzes davon in einer Beaufschlagungsrichtung davon definiert sind, aufgehoben ist.

3. Magnetischer Federaufbau nach Anspruch 1 oder 2, bei dem das bewegliche Element (14) aus einem ferromagnetischen Material gebildet ist und die Magnetpolumkehr ausführt, wenn es in einer Beaufschlagungsrichtung davon versetzt wird.

4. Magnetischer Federaufbau nach einem der vorstehenden Ansprüche, bei dem der stationäre Magnet (12, 13) als Verbundaufbau ausgestaltet ist.

5. Magnetischer Federaufbau nach einem der vorstehenden Ansprüche, bei dem das bewegliche Element (14) als Verbundaufbau ausgestaltet ist.

6. Aufwärtsbewegungsmechanismus, umfassend den magnetischen Federaufbau, wie er in einem der Ansprüche 1 bis 5 definiert ist, wobei das bewegliche Element (14), das durch die Wirkung eines Magnetfelds der stationären Magneten (12, 13) beaufschlagt ist in einer vorbestimmten Position in einem Bereich, in dem eine Federkonstante davon einen positiven Wert in einer Beaufschlagungsrichtung des beweglichen Elements aufweist, stabil gehalten wird.

7. Vibrationsdämpfermechanismus, umfassend:
den besagten magnetischen Federaufbau, wie er in einem der Ansprüche 1 bis 5 definiert ist; und
ein Dämpferelement, das in der Lage ist, eine Federkraft im Wesentlichen in einer relativen Betriebsrichtung der Lastmasse, die direkt und indirekt von dem besagten beweglichen Element des magnetischen Federaufbaus getragen wird, auszuüben;
wobei das bewegliche Element, das durch Wirkung eines Magnetfelds des stationären Magneten beaufschlagt wird, derart angeordnet ist, dass es innerhalb eines Bereichs versetzbar ist, in dem eine Federkonstante davon einen negativen Wert in einer Beaufschlagungsrichtung des beweglichen Elements aufweist, so dass eine gesamte **dadurch** erzielte Federkonstante durch eine Kombination mit dem Dämpferelement im Wesentlichen Null sein kann.

## Revendications

1. Structure de ressort magnétique comprenant :
au moins un élément mobile (14) constitué d'un matériau magnétique ; et
au moins deux aimants fixes (12, 13) agencés à l'extérieur dudit élément mobile de façon à définir un espace agissant comme passage pour ledit élément mobile ;
ledit aimant fixe poussant ledit élément mobile par l'action d'un champ magnétique généré par celui-ci,
les aimants fixes sont agencés de façon à être espacés l'un de l'autre à un intervalle prédéterminé dans une direction de l'agencement desdits aimants fixes, pour définir de ce fait l'espace entre eux, ledit élément mobile (14) étant constitué d'un aimant permanent qui est agencé de sorte qu'une direction de sa magnétisation est perpendiculaire à une direction de la magnétisation desdits aimants fixes (12, 13), **caractérisée en ce que** lesdits aimants fixes sont agencés d'une manière telle que les pôles magnétiques desdits aimants fixes adjacents l'un à l'autre dans ladite direction de l'agencement desdits aimants fixes sont opposés l'un à l'autre.

2. Structure de ressort magnétique selon la revendication 1, dans laquelle ledit élément mobile (14) est constitué d'un matériau ferromagnétique et comprend une pluralité de points auxquels chaque constante de ressort est inversée entre une valeur positive et une valeur négative définies à l'intérieur d'une plage de déplacement de celui-ci dans sa direction poussée.

3. Structure de ressort magnétique selon la revendication 1 ou 2, dans laquelle ledit élément mobile (14) est constitué d'un matériau ferromagnétique et effectue l'inversion des pôles magnétiques lorsqu'il est décalé dans sa direction poussée.

4. Structure de ressort magnétique selon l'une quelconque des revendications précédentes, dans laquelle ledit aimant fixe (12, 13) est constitué en une structure stratifiée.

5. Structure de ressort magnétique selon l'une quelconque des revendications précédentes, dans laquelle ledit élément mobile (14) est constitué en une structure stratifiée.

6. Mécanisme de montée comprenant ladite structure de ressort magnétique selon l'une quelconque des revendications 1 à 5, dans lequel ledit élément mobile (14) poussé par une action d'un champ magnétique dudit aimant fixe (12, 13) est maintenu stablement à une position prédéterminée dans une plage dans laquelle sa constante de ressort présente une valeur positive dans une direction poussée dudit élément mobile.

7. Mécanisme de libération de vibration comprenant :
ladite structure de ressort magnétique selon l'une quelconque des revendications 1 à 5 ; et
un élément d'amortissement capable de présenter une force élastique sensiblement dans une direction d'opération relative d'une masse de charge supportée directement et indirectement sur ledit élément mobile de ladite structure de ressort magnétique ;
ledit élément mobile poussé par une action du champ magnétique dudit élément fixe est agencé de façon à être déplaçable à l'intérieur d'une plage dans laquelle sa constante de ressort présente une valeur négative dans une direction poussée dudit élément mobile, de sorte que sa constante de ressort totale obtenue par une combinaison avec ledit élément d'amortissement peut être sensiblement égale à zéro.
